# EUROPEAN PATENT SPECIFICATION

(11) **EP 2 669 311 B1**
(45) Date of publication and mention of the grant of the patent: **29.06.2022**
(21) Application number: 12740013.3
(22) Date of filing: 23.01.2012
(51) Int. Cl.: C08G 64/06, C08G 64/30, G02B 5/30

(54) **POLYCARBONATE RESIN AND PROCESS FOR PRODUCTION THEREOF**
POLYCARBONATHARZ UND HERSTELLUNGSVERFAHREN DAFÜR
RÉSINE POLYCARBONATE ET SON PROCÉDÉ DE PRODUCTION

(30) Priority: 27.01.2011 JP 2011015117
(43) Date of publication of application: 04.12.2013
(73) Proprietor: Mitsubishi Gas Chemical Company, Inc., Tokyo 100-8324 (JP)
(72) Inventor: KATO, Noriyuki, Tokyo 125-8601 (JP); KUMAGAI, Yuki, Tokyo 125-8601 (JP); YOSHIDA, Shu, Tokyo 125-8601 (JP); ISHII, Takashi, Tokyo 125-8601 (JP); KANEKO, Kazuaki, Tokyo 125-8601 (JP); SEKIHARA, Kazuya, Tokyo 125-8601 (JP)
(74) Representative: Hoffmann Eitle
(86) International application number: PCT/JP2012/051308
(87) International publication number: WO 2012/102224

(56) References cited:
- EP-A1- 2 149 587
- WO-A1-2008/143205
- JP-A- 2000 169 573
- JP-A- 2006 089 671
- JP-A- 2006 089 671
- JP-A- 2006 131 789

## Description

### TECHNICAL FIELD

The present invention relates to a novel polycarbonate resin and a method for manufacturing it. The present invention in a particularly preferable embodiment relates to a novel polycarbonate resin having transparency, heat resistance, low photoelastic coefficient and mechanical strength which are preferable to a film used for optical applications, and an optical material using such a polycarbonate resin. A polycarbonate resin according to the present invention is preferably usable as an optical material for plastic optical products such as various types of optical lenses, prisms, optical disc substrates, optical fibers, optical communication devices and the like and optical films.

### BACKGROUND ART

Recently, along with the progress of optoelectronics, a transparent polymer for optical uses which is optically highly isotropic has been increasingly desired. Especially, a transparent film having optical characteristics applicable to a phase film of a liquid crystal display has been strongly desired.

Polycarbonate resins obtained by reacting 2,2-bis(4-hydroxyphenyl)propane (usually referred to as "bisphenol A") with phosgene or carbonic acid diester, especially, polycarbonate films, are used for packaging, optical devices, display device and various other industrial uses. Recently, such polycarbonate resins and polycarbonate films have been a target of attention as materials of phase plates, polarization plates, plastic substrates and the like in optoelectronic devices such as liquid crystal display devices and the like, and are increasingly put into practical use. For recent liquid crystal displays, especially TFT-type liquid crystal display elements which have been making a remarkable progress, such polycarbonate resins and polycarbonate films attract attention as materials of a phase film used between a liquid crystal layer and a polarization plate in order to improve the visibility of images.

A phase film has a role of converting elliptically polarized light transmitted through the liquid crystal layer into linearly polarized light. As a material of the phase film, a monoaxially stretched film of a polycarbonate resin mainly formed of bisphenol A is used.

However, when being used for a phase film, a film produced of a polycarbonate resin formed of bisphenol A has a large photoelastic coefficient due to the optical anisotropy of the benzene rings of the polycarbonate resin and thus has a problem of a large variance in phase contrast caused by a low stretching ratio. In addition, a film used in a liquid crystal display needs to be treated at a high temperature of 180°C or higher in an alignment film formation process or the like. The film produced of a polycarbonate resin formed of bisphenol A has a problem of not having a sufficient heat resistance against the heat treatment.

As a polycarbonate resin having a high heat resistance and a low photoelastic coefficient, a polycarbonate resin having a specific fluorene structure has been proposed (see, for example, Patent Documents 1 and 2). A polycarbonate resin having such a structure has a high heat resistance and a low photoelasticity, but does not have a sufficient film strength. For example, the film is broken when being stretched or wound, and is weak against bending. A film having a low strength against bending does not provide a smooth cutting face when being wound and cut, or may be broken when being stretched. Thus, improvement in the film strength has been desired. Also EP2149587 teaches polycarbonate copolymers suitable for optical applications or films.

### CITATION LIST

### PATENT LITERATURE

Patent Document 1: Japanese Patent No. 3187142
Patent Document 2: Japanese Laid-Open Patent Publication No. 2001-253960

### SUMMARY OF INVENTION

### TECHNICAL PROBLEM TO BE SOLVED

The present invention, made in light of the above-described situation, has an object of solving at least one of the above-described problems of the conventional art, and specifically of providing a novel polycarbonate resin having transparency, heat resistance, low photoelastic coefficient and mechanical strength which are preferable to a film used for optical applications, a method for manufacturing such a polycarbonate resin, and an optical material using such a polycarbonate resin.

### SOLUTION TO SOLVE THE PROBLEM

The present inventors accumulated active studies in order to solve the above-described problems, and found that a polycarbonate resin including a structural unit represented by the following general formula (I) solves the problems and thus arrived at the present invention.

Namely, the above-described problems can be solved by the present invention described below.
<1> An embodiment of the present invention is directed to a polycarbonate resin, comprising a structural unit represented by a general formula (I) below: 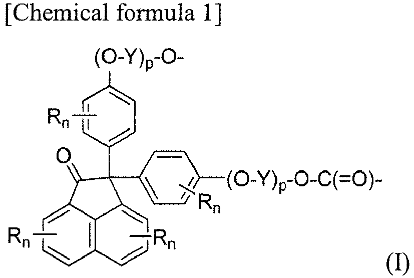 (where R's independently represent a halogen atom, an alkyl group having 1 to 9 carbon atoms, an aryl group having 6 to 12 carbon atoms, an alkenyl group having 2 to 5 carbon atoms, an alkoxy group having 1 to 5 carbon atoms, or an aralkyl group having 7 to 17 carbon atoms; n's independently indicate the number of R's which substitute on a corresponding benzene ring and independently represent an integer of 0 to 4; Y represents an alkylene group having 1 to 4 carbon atoms; and p represents an integer of 0 to 4).
<2> A preferable embodiment of the present invention is directed to the polycarbonate resin according to <1>, further comprising a structural unit represented by a general formula (II) below: 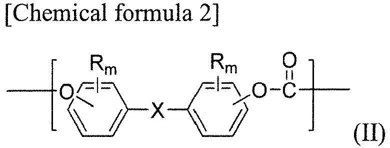 (where R's independently represent a halogen atom, an alkyl group having 1 to 9 carbon atoms, an aryl group having 6 to 12 carbon atoms, an alkenyl group having 2 to 5 carbon atoms, an alkoxy group having 1 to 5 carbon atoms, or an aralkyl group having 7 to 17 carbon atoms; m's independently indicate the number of R's which substitute on a corresponding benzene ring and independently represent an integer of 0 to 4; and X represents a group selected from: 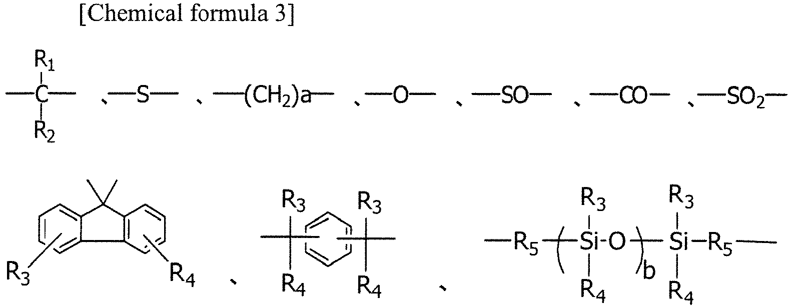 in which R₁ and R₂ independently represent hydrogen, fluorine, chlorine, bromine, iodine, an alkyl group having 1 to 9 carbon atoms, an alkoxy group having 1 to 5 carbon atoms, an aryl group having 6 to 12 carbon atoms, an alkenyl group having 2 to 5 carbon atoms, or an aralkyl group having 7 to 17 carbon atoms, or R₁ and R₂ are bonded together to form a carbocycle or a heterocycle; R₃'s and R₄'s independently represent hydrogen, fluorine, chlorine, bromine, iodine, an alkyl group having 1 to 9 carbon atoms, an alkoxy group having 1 to 5 carbon atoms, or an aryl group having 6 to 12 carbon atoms; R₅'s independently represent an alkylene group having 1 to 9 carbon atoms; a represents an integer of 0 to 20; and b represents an integer of 1 to 500).
<3> Another preferable embodiment of the present invention is directed to the polycarbonate resin according to <1> or <2>, which has an intrinsic viscosity of 0.3 to 2.0 dl/g.
<4> A still another preferable embodiment of the present invention is directed to the polycarbonate resin according to any one of <1> through <3>, which has a glass transition temperature of 140°C or higher, a photoelastic coefficient of 50 × 10⁻¹²m²/N or lower, and a strength of 60 MPa or higher when being formed into a 100 µm-thick film.
<5> A still another preferable embodiment of the present invention is directed to the polycarbonate resin according to <1>, wherein the structural unit represented by the general formula (I) occupies 5 to 100 mol% with respect to all the structural units included therein.
<6> A still another preferable embodiment of the present invention is directed to the polycarbonate resin according to <2>, wherein the structural unit represented by the general formula (II) is 2,2-bis(4-hydroxyphenyl)propane.
<7> Another embodiment of the present invention is directed to an optical material, comprising the polycarbonate resin according to any one of <1> through <6>.
<8> Still another embodiment of the present invention is directed to an optical film, comprising the polycarbonate resin according to any one of <1> through <6>.
<9> Still another embodiment of the present invention is directed to a method for manufacturing the polycarbonate resin according to <2>, the method comprising the step of performing melt polycondensation of a dihydroxy compound represented by a general formula (III) below, a dihydroxy compound represented by a general formula (IV) below and a carbonic acid ester-forming compound in the presence of a basic compound catalyst: 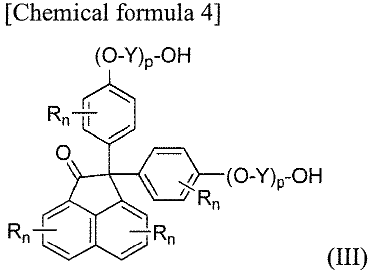 (where R's independently represent a halogen atom, an alkyl group having 1 to 9 carbon atoms, an aryl group having 6 to 12 carbon atoms, an alkenyl group having 2 to 5 carbon atoms, an alkoxy group having 1 to 5 carbon atoms, or an aralkyl group having 7 to 17 carbon atoms; n's independently indicate the number of R's which substitute on a corresponding benzene ring and independently represent an integer of 0 to 4; Y represents an alkylene group having 1 to 4 carbon atoms; and p represents an integer of 0 to 4); 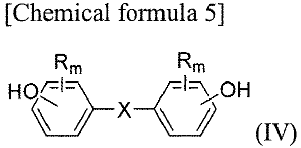 (where R's independently represent a halogen atom, an alkyl group having 1 to 9 carbon atoms, an aryl group having 6 to 12 carbon atoms, an alkenyl group having 2 to 5 carbon atoms, an alkoxy group having 1 to 5 carbon atoms, or an aralkyl group having 7 to 17 carbon atoms; m's independently indicate the number of R's which substitute on a corresponding benzene ring and independently represent an integer of 0 to 4; and X represents a group selected from: 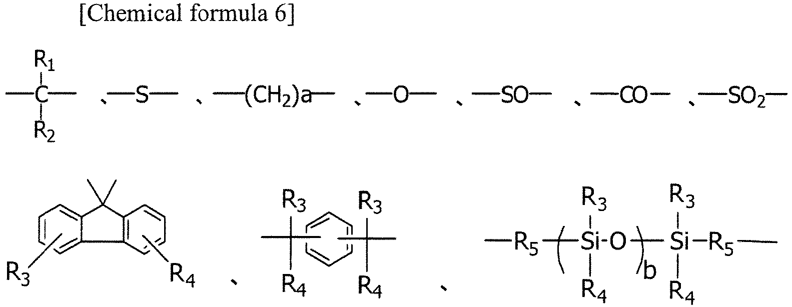 where R₁ and R₂ independently represent hydrogen, fluorine, chlorine, bromine, iodine, an alkyl group having 1 to 9 carbon atoms, an alkoxy group having 1 to 5 carbon atoms, an aryl group having 6 to 12 carbon atoms, an alkenyl group having 2 to 5 carbon atoms, or an aralkyl group having 7 to 17 carbon atoms, or R₁ and R₂ are bonded together to form a carbocycle or a heterocycle; R₃'s and R₄'s independently represent hydrogen, fluorine, chlorine, bromine, iodine, an alkyl group having 1 to 9 carbon atoms, an alkoxy group having 1 to 5 carbon atoms, or an aryl group having 6 to 12 carbon atoms; R₅'s independently represent an alkylene group having 1 to 9 carbon atoms; a represents an integer of 0 to 20; and b represents an integer of 1 to 500).
<10> Still another embodiment of the present invention is directed to a method for manufacturing the polycarbonate resin according to <2>, the method comprising the step of performing solution polymerization or interfacial polymerization of a dihydroxy compound represented by a general formula (III) below, a dihydroxy compound represented by a general formula (IV) below, a carbonic acid ester-forming compound and a terminal blocking agent: 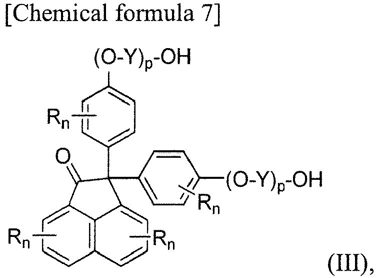 (where R's independently represent a halogen atom, an alkyl group having 1 to 9 carbon atoms, an aryl group having 6 to 12 carbon atoms, an alkenyl group having 2 to 5 carbon atoms, an alkoxy group having 1 to 5 carbon atoms, or an aralkyl group having 7 to 17 carbon atoms; n's independently indicate the number of R's which substitute on a corresponding benzene ring and independently represent an integer of 0 to 4; Y represents an alkylene group having 1 to 4 carbon atoms; and p represents an integer of 0 to 4); 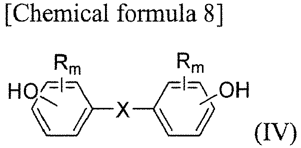 (where R's independently represent a halogen atom, an alkyl group having 1 to 9 carbon atoms, an aryl group having 6 to 12 carbon atoms, an alkenyl group having 2 to 5 carbon atoms, an alkoxy group having 1 to 5 carbon atoms, or an aralkyl group having 7 to 17 carbon atoms; m's independently indicate the number of R's which substitute on a corresponding benzene ring and independently represent an integer of 0 to 4; and X represents a group selected from: 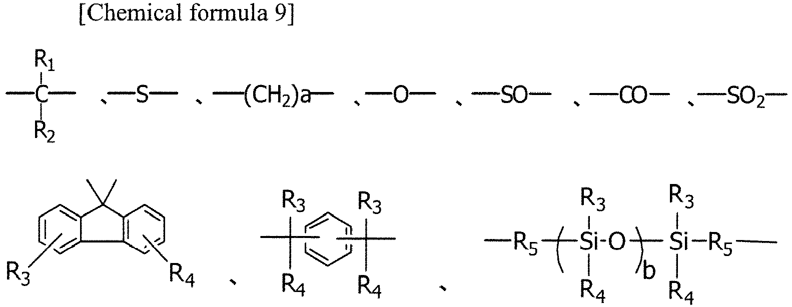 where R₁ and R₂ independently represent hydrogen, fluorine, chlorine, bromine, iodine, an alkyl group having 1 to 9 carbon atoms, an alkoxy group having 1 to 5 carbon atoms, an aryl group having 6 to 12 carbon atoms, an alkenyl group having 2 to 5 carbon atoms, or an aralkyl group having 7 to 17 carbon atoms, or R₁ and R₂ are bonded together to form a carbocycle or a heterocycle; R₃'s and R₄'s independently represent hydrogen, fluorine, chlorine, bromine, iodine, an alkyl group having 1 to 9 carbon atoms, an alkoxy group having 1 to 5 carbon atoms, or an aryl group having 6 to 12 carbon atoms; R₅'s independently represent an alkylene group having 1 to 9 carbon atoms; a represents an integer of 0 to 20; and b represents an integer of 1 to 500).

### ADVANTAGEOUS EFFECTS OF INVENTION

By use of a polycarbonate resin in a preferable embodiment according to the present invention, plastic products such as various types of lenses, prisms, optical disc substrates, optical fibers and the like and optical films which have a high transparency, a high heat resistance, a low photoelastic coefficient and a high mechanical strength can be produced.

### DESCRIPTION OF EMBODIMENTS

Hereinafter, a polycarbonate resin and a method for manufacturing it according to the present invention will be specifically described.

### 1. Polycarbonate resin

A polycarbonate resin according to the present invention is characterized in including a structural unit represented by the following general formula (I). An embodiment in which the structural unit represented by the following general formula (I) occupies 5 to 100 mol% with respect to all the structural units included in the polycarbonate resin is preferable. A polycarbonate resin in which the structural unit represented by the following general formula (I) occupies 100 mol% with respect to all the structural units included therein is a homopolymer. A polycarbonate resin including a structural unit represented by the following general formula (II) in addition to the structural unit represented by the following general formula (I) is also preferable.

In a copolymer including the structural unit represented by general formula (I) (hereinafter, referred to also as the "structural unit (I)") and the structural unit represented by general formula (II) (hereinafter, referred to also as the "structural unit (II)"), the ratio (mol%) of the structural unit (I), namely, [structural unit (I)/(structural unit (I) + structure unit (II))], is preferably 5 mol% or higher. A reason for this is that the heat resistance is improved when the ratio of the structural unit (I) is 5 mol% or higher. In the case of this copolymer, it is especially preferable that the ratio of the structural unit (I) is 10 to 85 mol%. A reason for this is the balance between the optical properties and the moldability is good when the ratio is 10 to 85 mol%. 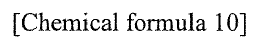 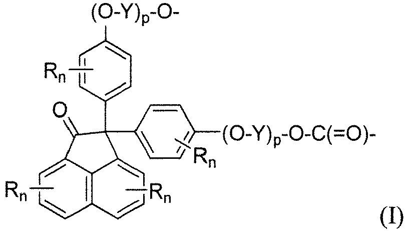 In the formula, R's independently represent a halogen atom, an alkyl group having 1 to 9 carbon atoms, an aryl group having 6 to 12 carbon atoms, an alkenyl group having 2 to 5 carbon atoms, an alkoxy group having 1 to 5 carbon atoms, or an aralkyl group having 7 to 17 carbon atoms. n's independently indicate the number of R's which substitute on a corresponding benzene ring and independently represent an integer of 0 to 4. Y represents an alkylene group having 1 to 4 carbon atoms. p represents an integer of 0 to 4.

In general formula (I), R preferably represents one selected from a halogen atom, an alkyl group having 1 to 4 carbon atoms, an aryl group having 6 to 12 carbon atoms, an alkenyl group having 2 to 4 carbon atoms, an alkoxy group having 1 to 3 carbon atoms, and an aralkyl group having 7 to 13 carbon atoms. More preferably, R is methyl, cyclohexyl or phenyl.

n represents preferably an integer of 0 to 1. Preferably, Y represents an alkylene group having 1 to 2 carbon atoms, and p represents an integer of 0 to 1.

Specific examples of the structural unit (I) include residues such as acenaphthoquinonebisphenol, acenaphthoquinonebiscresol, acenaphthoquinonebisphenoxyethanol, acenaphthoquinonebisphenoxypropanol and the like. According to the present invention, two or more of these residues may be used. Especially, acenaphthoquinonebiscresol and acenaphthoquinonebisphenoxyethanol are preferable.

Now, the structural unit represented by general formula (II) will be described. 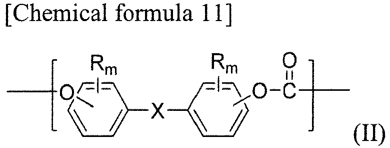 In the formula, R's independently represent a halogen atom, an alkyl group having 1 to 9 carbon atoms, an aryl group having 6 to 12 carbon atoms, an alkenyl group having 2 to 5 carbon atoms, an alkoxy group having 1 to 5 carbon atoms, or an aralkyl group having 7 to 17 carbon atoms. m's independently indicate the number of R's which substitute on a corresponding benzene ring and independently represent an integer of 0 to 4. X represents a group selected from: 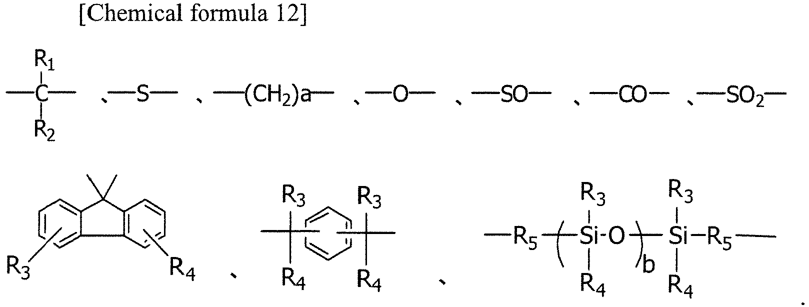 R₁ and R₂ independently represent hydrogen, fluorine, chlorine, bromine, iodine, an alkyl group having 1 to 9 carbon atoms, an alkoxy group having 1 to 5 carbon atoms, an aryl group having 6 to 12 carbon atoms, an alkenyl group having 2 to 5 carbon atoms, or an aralkyl group having 7 to 17 carbon atoms. Alternatively, R₁ and R₂ are bonded together to form a carbocycle or a heterocycle. Examples of the carbocycle include cyclopentane, cyclohexane, cycloheptane, cyclododecane and the like. Examples of the heterocycle include tetrahydrofuran, tetrahydrothiophene, thiolane and the like.

R₃'s and R₄'s independently represent hydrogen, fluorine, chlorine, bromine, iodine, an alkyl group having 1 to 9 carbon atoms, an alkoxy group having 1 to 5 carbon atoms, or an aryl group having 6 to 12 carbon atoms. R₅'s independently represent an alkylene group having 1 to 9 carbon atoms. "a" represents an integer of 0 to 20, and b represents an integer of 1 to 500.

In general formula (II), R preferably represents one selected from a halogen atom, an alkyl group having 1 to 4 carbon atoms, an aryl group having 6 to 12 carbon atoms, an alkenyl group having 2 to 4 carbon atoms, an alkoxy group having 1 to 3 carbon atoms, and an aralkyl group having 7 to 13 carbon atoms. More preferably, R is methyl, cyclohexyl or phenyl. Preferably, X may be any of an isopylidene group, a methylene group and a fluorenonyl group.

In order to have a sufficient strength as a film or sheet, a polycarbonate resin including the structural unit (I) or a polycarbonate resin including the structural units (I) and (II) preferably has an intrinsic viscosity of 0.30 to 2.0 dl/g, and more preferably has an intrinsic viscosity of 0.40 to 1.5 dl/g. The "intrinsic viscosity" is the viscosity increase ratio per unit concentration of a polymer that is found in a dilute solution in which the influence by polymer-to-polymer contact is negligible.

A polycarbonate resin including the structural unit (I) or a polycarbonate resin including the structural units (I) and (II) preferably has a glass transition temperature of 140°C or higher, and more preferably has a glass transition temperature of 140 to 180°C. A reason for this is that the resin is easily injection-molded when the glass transition temperature is 140 to 180°C.

A polycarbonate resin including the structural unit (I) or a polycarbonate resin including the structural units (I) and (II) preferably has a photoelastic coefficient of 50 × 10⁻¹² m²/N or lower, and more preferably has a photoelastic coefficient of 30 × 10⁻¹² m²/N or lower. A reason for this is that birefringence does not easily occur when the photoelastic coefficient of 50 × 10⁻¹² m²/N or lower.

A polycarbonate resin including the structural unit (I) or a polycarbonate resin including the structural units (I) and (II) preferably has a strength of 60 MPa or higher, and more preferably has a strength is 70 to 100 MPa, when being formed into a 100 µm-thick film. A reason for this is that the film is strong when the strength is 60 MPa or higher.

A polycarbonate resin including the structural unit (I) preferably has an average molecular weight (Mw) of 25000 to 55000, and more preferably has an average molecular weight (Mw) of 30000 to 45000. A polycarbonate resin including the structural units (I) and (II) preferably has an average molecular weight (Mw) of 25000 to 55000, and more preferably has an average molecular weight (Mw) of 30000 to 45000.

A carbonate unit other than the structural unit (I) or (II) may be included as long as the effect of the present invention is not spoiled.

### 2. Method for manufacturing a polycarbonate resin

A polycarbonate resin including only the structural unit (I) (homopolymer) is produced by a method including the step of performing melt polycondensation of a bisphenol (dihydroxy compound) represented by the following general formula (III) and a carbonic acid ester-forming compound in the presence of a basic compound catalyst. Alternatively, such a polycarbonate resin is produced by a method including the step of performing solution polymerization or interfacial polymerization of a dihydroxy compound represented by the following general formula (III), a carbonic acid ester-forming compound and a terminal blocking agent.

A polycarbonate resin including the structural units (I) and (II) is produced by a method including the step of performing melt polycondensation of a bisphenol (dihydroxy compound) represented by the following general formula (III), a bisphenol (dihydroxy compound) represented by the following general formula (IV) and a carbonic acid ester-forming compound in the presence of a basic compound catalyst. Alternatively, such a polycarbonate resin is produced by a method including the step of performing solution polymerization or interfacial polymerization of a dihydroxy compound represented by the following general formula (III), a dihydroxy compound represented by the following general formula (IV), a carbonic acid ester-forming compound and a terminal blocking agent.

Specifically, the polycarbonate resins may be produced by a known method used for producing a polycarbonate from bisphenol A and a carbonic acid ester-forming compound, for example, a direct reaction of a bisphenol and phosgene (phosgene method), a transesterification reaction of a bisphenol and bisarylcarbonate (transesterification method) or the like.

The phosgene method uses solution polymerization or interfacial polymerization, and the transesterification method uses melt polycondensation. 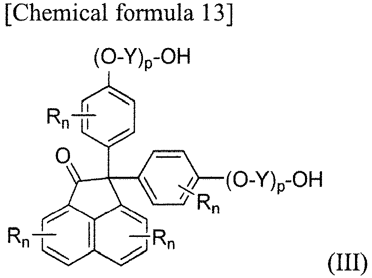 In the formula, R's independently represent a halogen atom, an alkyl group having 1 to 9 carbon atoms, an aryl group having 6 to 12 carbon atoms, an alkenyl group having 2 to 5 carbon atoms, an alkoxy group having 1 to 5 carbon atoms, or an aralkyl group having 7 to 17 carbon atoms. n's independently indicate the number of R's which substitute on a corresponding benzene ring and independently represent an integer of 0 to 4. Y represents an alkylene group having 1 to 4 carbon atoms. p represents an integer of 0 to 4.

In general formula (III), R preferably represents one selected from a halogen atom, an alkyl group having 1 to 4 carbon atoms, an aryl group having 6 to 12 carbon atoms, an alkenyl group having 2 to 4 carbon atoms, an alkoxy group having 1 to 3 carbon atoms, and an aralkyl group having 7 to 13 carbon atoms. More preferably, R is methyl, cyclohexyl or phenyl.

n represents preferably an integer of 0 to 1. Preferably, Y represents an alkylene group having 1 to 2 carbon atoms, and p represents an integer of 0 to 1.

Examples of the bisphenol represented by general formula (III) include acenaphthoquinonebisphenol, acenaphthoquinonebiscresol, acenaphthoquinonebisphenoxyethanol, acenaphthoquinonebisphenoxypropanol and the like. According to the present invention, two or more of these may be used. Especially, acenaphthoquinonebiscresol and acenaphthoquinonebisphenoxyethanol are preferable.

Now, the dihydroxy compound represented by general formula (IV) will be described. 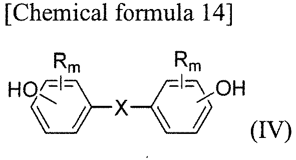 In the formula, R's independently represent a halogen atom, an alkyl group having 1 to 9 carbon atoms, an aryl group having 6 to 12 carbon atoms, an alkenyl group having 2 to 5 carbon atoms, an alkoxy group having 1 to 5 carbon atoms, or an aralkyl group having 7 to 17 carbon atoms. m's independently indicate the number of R's which substitute on a corresponding benzene ring and independently represent an integer of 0 to 4. X represents a group selected from: 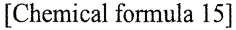 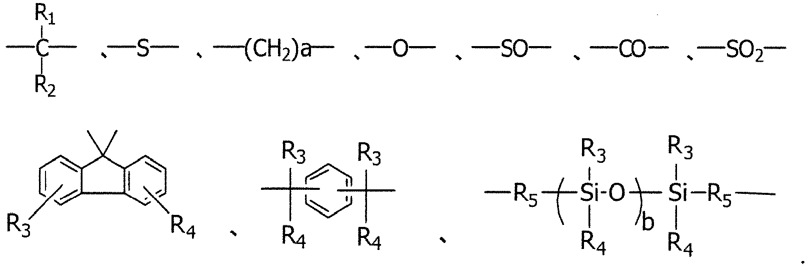 R₁ and R₂ independently represent hydrogen, fluorine, chlorine, bromine, iodine, an alkyl group having 1 to 9 carbon atoms, an alkoxy group having 1 to 5 carbon atoms, an aryl group having 6 to 12 carbon atoms, an alkenyl group having 2 to 5 carbon atoms, or an aralkyl group having 7 to 17 carbon atoms. Alternatively, R₁ and R₂ are bonded together to form a carbocycle or a heterocycle. Examples of the carbocycle include cyclopentane, cyclohexane, cycloheptane, cyclododecane and the like. Examples of the heterocycle include tetrahydrofuran, tetrahydrothiophene, thiolane and the like.

R₃'s and R₄'s independently represent hydrogen, fluorine, chlorine, bromine, iodine, an alkyl group having 1 to 9 carbon atoms, an alkoxy group having 1 to 5 carbon atoms, or an aryl group having 6 to 12 carbon atoms. R₅'s independently represent an alkylene group having 1 to 9 carbon atoms. "a" represents an integer of 0 to 20, and b represents an integer of 1 to 500.

In general formula (IV), R preferably represents one selected from a halogen atom, an alkyl group having 1 to 4 carbon atoms, an aryl group having 6 to 12 carbon atoms, an alkenyl group having 2 to 4 carbon atoms, an alkoxy group having 1 to 3 carbon atoms, and an aralkyl group having 7 to 13 carbon atoms. More preferably, R is methyl, cyclohexyl or phenyl.

The bisphenol represented by general formula (IV) shown above may be any of various compounds. Specific examples thereof include the following: 1,1'-biphenyl-4,4'-diol, bis(4-hydroxyphenyl)methane, 1,1-bis(4-hydroxyphenyl)ethane, bis(4-hydroxyphenyl)ether, bis(4-hydroxyphenyl)sulfoxide, bis(4-hydroxyphenyl)sulfide, bis(4-hydroxyphenyl)sulfone, bis(4-hydroxyphenyl)ketone, 2,2-bis(4-hydroxyphenyl)propane, 2,2-bis(4-hydroxy-3-t-butylphenyl)propane, 2,2-bis(4-hydroxy-3-methylphenyl)propane, 1,1 -bis(4-hydroxyphenyl)cyclopentane, 1,1-bis(4-hydroxyphenyl)cyclohexane, 2,2-bis(4-hydroxyphenyl)hexafluoropropane, bis(4-hydroxyphenyl)diphenylmethane, 1,1-bis(4-hydroxyphenyl)-1-phenylethane, 9,9-bis(4-hydroxyphenyl)fluorene, 9,9-bis(4-hydroxy-3-methylphenyl)fluorene, α,ω-bis[2-(p-hydroxyphenyl)ethyl]polydimethylsiloxane, α,ω-bis[3-(o-hydroxyphenyl)propyl]polydimethylsiloxane, 4,4'-[1,3-phenylenebis(1-methylethylidene)]bisphenol, 1,1-bis(4-hydroxyphenyl)-1-phenylethane, and the like. Two or more of these may be used in combination. Among these, it is especially preferable to use any of 2,2-bis(4-hydroxyphenyl)propane (bisphenol A: BPA), 2,2-bis(4-hydroxy-3-methylphenyl)propane (bisphenol C: BPC), bis(4-hydroxyphenyl)ether, 1,1-bis(4-hydroxyphenyl)cyclohexane (bisphenol Z: BPZ), and 1,1-bis(4-hydroxyphenyl)-1-phenylethane (bisphenol AP: BPAP). It is more preferable to use BPA or BPZ.

Examples of the carbonic acid ester-forming compound include phosgene, and bisallylcarbonate such as diphenylcarbonate, di-p-tolylcarbonate, phenyl-p-tolylcarbonate, di-p-chlorophenylcarbonate, dinaphthylcarbonate and the like. Two or more of these compounds may be used in combination.

Examples of the terminal blocking agent include p-t-butylphenol, p-nonylphenol, p-cumylphenol, long-chain alkyl-substituted phenol, and the like.

According to the phosgene method, a bisphenol represented by general formula (III) and phosgene are reacted, or a bisphenol represented by general formula (III), a bisphenol represented by general formula (IV) and phosgene are reacted, usually in the presence of an acidic binder and a solvent. Usable examples of the acidic binder include pyridine, and hydroxides of alkaline metal such as sodium hydroxide, potassium hydroxide and the like. Usable examples of the solvent include methylene chloride, chloroform and the like. In order to promote the polycondensation reaction, it is preferable to add a catalyst such as a tertiary amine, for example, triethylamine or a quaternary ammonium salt. In order to adjust the polymerization degree, it is preferable to add, as a terminal blocking agent, a monofunctional compound such as phenol, p-t-butylphenol, p-cumylphenol, long-chain alkyl-substituted phenol, olefin-substituted phenol or the like. Optionally, an antioxidant such as sodium bisulfide, hydrosulfite or the like, or a branching agent such as phloroglucin, isatinbisphenol or the like may be added in a small amount. It is usually appropriate that the reaction is performed in the range of 0 to 150°C, preferably in the range of 5 to 40°C. The reaction time depends on the reaction temperature, and is usually 0.5 minutes to 10 hours, preferably 1 minute to 2 hours. During the reaction, it is desirable to keep the pH of the reaction system at 10 or higher.

According to the transesterification method, a bisphenol represented by general formula (III) and bisarylcarbonate are mixed, or a bisphenol represented by general formula (III), a bisphenol represented by general formula (IV) and bisarylcarbonate are mixed, and reacted under a reduced pressure at a high temperature. The reaction is usually performed in the temperature range of 150 to 350°C, preferably in the temperature range of 200 to 300°C. The pressure reduction degree is preferably set to be 1 mmHg or lower at the end of the reaction so that bisarylcarbonate-derived phenols generated by the transesterification reaction is removed outside the system by distillation. The reaction time depends on the reaction temperature, the pressure reduction degree and the like, and is usually about 1 to 4 hours. The reaction is preferably performed in an inert gas atmosphere such as nitrogen, argon or the like. Optionally, a terminal blocking agent, an antioxidant or a branching agent may be added for the reaction.

According to the present invention, it is desirable to add any of various known additives suitable for a specific purpose, together with the above-described specific compounds to an aromatic-aliphatic polycarbonate resin copolymer, in a range in which the properties of the above-described specific compounds are not spoiled.

Examples of the antioxidant include phosphite compounds such as triphenylphosphite, tris(4-methylphenyl)phosphite, tris(4-t-butylphenyl)phosphite, tris(monononylphenyl)phosphite, tris(2-methyl-4-ethylphenyl)phosphite, tris(2-methyl-4-t-butylphenyl)phosphite, tris(2,4-di-t-butylphenyl)phosphite, tris(2,6-di-t-butylphenyl)phosphite, tris(2,4-di-t-butyl-5-methylphenyl)phosphite, tris(mono,dinonylphenyl)phosphite, bis(monononylphenyl)pentaerythritol-di-phosphite, bis(2,4-di-t-butylphenyl)pentaerythritol-di-phosphite, bis(2,6-di-t-butyl-4-methylphenyl)pentaerythritol-di-phosphite, bis(2,4,6-tri-t-butylphenyl)pentaerythritol-diphosphite, bis(2,4-di-t-butyl-5-methylphenyl)pentaerythritol-di-phosphite, 2,2-methylenebis(4,6-dimethylphenyl)octylphosphite, 2,2-methylenebis(4-t-butyl-6-methylphenyl)octylphosphite, 2,2-methylenebis(4,6-di-t-butylphenyl)octylphosphite, 2,2-methylenebis(4,6-dimethylphenyl)hexylphosphite, 2,2-methylenebis(4,6-di-t-buthylphenyl)hexylphosphite, 2,2-methylenebis(4,6-di-t-butylphenyl)stearylphosphite, and the like; hindered phenol-based compounds such as pentaerythritol-tetrakis[3-(3,5-dit-butyl-4-hydroxyphenyl)propionate], 1,6-hexanediol-bis[3-(3,5-di-t-butyl-4-hydroxyphenyl)propionate], octadecyl-3-(3,5-di-t-butyl-4-hydroxyphenyl)propionate], 1,3,5-trimethyl-2,4,6-tris(3,5-di-t-butyl-4-hydroxybenzyl)genzene], triethyleneglycol-bis[3-(3-t-butyl-5-methyl-4-hydroxyphenyl)propionate], 3,9-bis{2-[3-(3-t-butyl-4-hydroxy-5-methylphenyl)propionyloxy]-1,1-dimethylethyl}-2,4,8,10-tetraoxaspyro[5,5]undecane, 1,1,3-tris[2-methyl-4-(3,5-di-t-butyl-4-hydroxyphenylpropionyloxy)-5-t-butylphenyl]butane, and the like; 5,7-di-t-butyl-3-(3,4-dimethylphenyl)-3H-benzofuran-2-one; and the like. These compounds may be used independently or in a combination of two or more thereof.

The amount of such an antioxidant is 0.005 to 0.1% by weight, preferably 0.01 to 0.08% by weight, and more preferably 0.01 to 0.05% by weight, with respect to 100% by weight of the aromatic-aliphatic polycarbonate resin copolymer. When the amount is smaller than such a range, a desired effect is not provided. When the amount is larger than such a range, the heat resistance and the mechanical properties are inappropriately decreased.

Examples of ultraviolet absorber include 2-(5-methyl-2-hydroxyphenyl)benzotriazole, 2-[2-hydroxy-3,5-bis(a,a-dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-2-hydroxyphenyl)-5-chlorobenzotriazole, 2-(3,5-di-t-amyl-2-hydroxyphenyl)benzotriazole, 2-(2'-hydroxy-5'-t-octylphenyl)benzotriazole, 2,2'-methylenebis[4-(1,1,3,3-tetramethylbutyl)-6-[(2H-benzotriazole-2-yl)phenol]], 2-(4,6-diphenyl-1,3,5-triazine-2-yl)-5-[(hexyl)oxy]-phenol, 2,4-dihydroxobenzophenone, 2-hydroxy-4-n-octyloxybenzophenone, 2-hydroxy-4-methoxy-2'-carboxybenzophenone, and the like. These compounds may be used independently or in a combination of two or more thereof.

As a mold release agent, any mold release agent generally used is usable. Examples of the mold release agent include fatty acid esters such as natural paraffin, synthetic paraffin, silicone oil, polyethylene wax, beeswax, stearic acid, monoglyceride stearate, stearyl stearate, monoglyceride palmitate, behenine behenate, monoglyceride laurate, pentaerythritoldistearate, pentaerythritoltetrastearate, and the like. These substances may be used independently or in a combination of two or more thereof.

Optionally, any of flame retardants, antistatic agents, pigments, dyes, polymer modifiers, lubricants, plasticizers and the like is usable independently or in a combination of two or more thereof.

A film or sheet may be produced by any method. A solution casting method is especially preferable. For the solution cast method, any of various solvents capable of dissolving the polycarbonate copolymer is usable. Methylene chloride, tetrahydrofuran, dioxane and the like are preferable.

The present invention also provides an optical material using a polycarbonate resin described above according to the present invention.

Examples of the optical material include plastic optical products such as various type of optical lenses, prisms, optical disc substrates, optical fibers, optical communication devices and the like, optical films and the like. When being used for the above-described applications, a polycarbonate resin according to the present invention is usable in the form of a PC resin composition containing any of known antioxidant, ultraviolet absorber, photostabilizer, colorant such as fluorescent colorant, photochromic colorant or the like, refractive index adjuster, inorganic microparticle and the like.

### Examples

Hereinafter, the present invention will be described by way of examples, but the present invention is not limited to the following examples in any way. The measured values in the examples were obtained by the following methods and devices.
1) Intrinsic viscosity: An Ubbelohde viscometer pipe was used. Measured at 20°C with 0.5% dichloromethane solution and a Huggins constant of 0.45.
2) Glass transition temperature (Tg): Measured by a differential thermal scanning calorimeter (DSC).
3) Photoelastic coefficient: A cast film having a thickness of 100 µm was irradiated with laser light having a wavelength of 633 nm, and the photoelastic coefficient was calculated from a birefringence with respect to a load change using an ellipsometer.
4) Film strength and elongation: A tensile strength and a tensile elongation of films having a thickness of 100 µm obtained in the examples were measured by Autograph AGS-100G produced by Shimadzu Corporation in conformity to ASTM D882-61 T.

### <Synthesis example 1>

### Method for synthesizing acenaphthoquinonebiscresol

In a glass reactor including a stirrer, a thermometer and a cooling pipe, 43.2 g (0.4 mol) of o-cresol and 18.2 g (0.1 mol) of acenaphthenequinone were mixed and heated to about 60°C to be dissolved. Then, 0.1 ml of sulfuric acid and 0.8 ml of 3-mercaptopropionic acid, and 10 ml of toluene were added thereto to perform a reaction while the substances were stirred. After confirming that the inversion ratio of o-cresol was 100%, 100 ml of toluene was added, and the substances were cooled. The deposited solid was taken out by filtration, then stirred and washed with warm water of 60°C, and recrystallized. Thus, 6.86 g of acenaphthoquinonebiscresol (yield: 18.0%) was obtained.

### <Synthesis example 2>

### Method for synthesizing acenaphthoquinonebisphenoxyethanol

Into a glass reactor including a stirrer, a nitrogen blower pipe, a thermometer and a water separator having a cooling pipe, 400 g of toluene and 3.25 g of phosphotungstic acid were put and subjected to azeotropic dehydration in toluene reflux. To the resultant substances, 129.6 g (0.712 mol) of acenaphthenequinone, 994.9 g (7.20 mol) of 2-phenoxyethanol, and 118.7 g of toluene were added, and the substances were stirred for 21 hours in toluene reflux while water generated by the reaction was removed outside the system. To the obtained reaction mixture, 1560 g of toluene was added. The obtained mixture was adjusted to 70°C and washed four times with 520 g of water. The obtained organic layer was concentrated under a reduced pressure to remove toluene and an excessive part of 2-phenoxyethanol. To the obtained mixture, 1800 g of toluene was added to dissolve the resultant mixture at 80°C, and the obtained solution was decolored with activated carbon. The obtained solution was gradually cooled. At 42°C, crystals started to be deposited. The substance was cooled down to 30°C. The deposited crystals were taken out by filtration and dried. Thus, 260 g of white crystals of acenaphthoquinonebisphenoxyethanol (yield: 82.4%) were obtained.

### <Example 1>

In 1100 ml of 5 w/w% aqueous solution of sodium hydroxide, 228.26 g (0.6 mol) of acenaphthoquinonebiscresol (hereinafter, referred to simply as "BisOC-ACNQ") obtained in synthesis example 1 above and 0.1 g of hydrosulfite were dissolved. 500 ml of methylene chloride was added thereto. The substances were stirred while being kept at 15°C, and then 90 g of phosgene was blown thereto over 90 minutes. After the blowing of phosgene was finished, 4.18 g of p-t-butylphenol (hereinafter, referred to simply as "PTBP"; produced by Dainippon Ink Kagaku Kogyo Kabushiki Kaisha) was added as a terminal blocking agent, and the substances were vigorously stirred to emulsify the reaction solution. After the emulsification, 0.6 ml of triethylamine was added, and the substances were stirred at 20 to 25°C for 1 hour to be polymerized.

After the polymerization, the reaction solution was separated into a water phase and an organic phase. The organic phase was neutralized with phosphoric acid, and washed repeatedly until the conductivity of the prior solution (water phase) became 10 µS/cm or lower. The obtained polymer solution was dripped to warm water kept at 45°C, and the solvent was vaporized to be removed. Thus, a white powdery precipitate was obtained. The obtained precipitate was filtrated and dried at 105°C for 24 hours. Thus, a powdery polymer was obtained.

The intrinsic viscosity at 20°C of a solution of this polymer using methylene chloride as a solvent and having a concentration of 0.5 g/dl was 0.55 dl/g. The obtained polymer was analyzed by infrared absorption spectrum. Absorption by a carbonyl group was recognized at a position in the vicinity of 1770 cm⁻¹, and absorption by an ether bond was recognized at a position in the vicinity of 1240 cm⁻¹. Thus, it was confirmed that the resultant polymer was a polycarbonate resin including the structural unit represented by generation formula (I) above. The structural formula of the obtained resin is as follows.

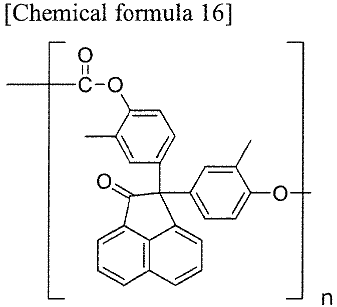

The obtained resin was dissolved in methylene chloride (polymer solution concentration: 20 wt.%) and then cast to produce a film.

### <Example 2>

Substantially the same process as that in Example 1 was performed except that 114.13 g (0.3 mol) of BisOC-ACNQ and 68.4 g (0.3 mol) of 2,2-bis(4-hydroxyphenyl)propane (bisphenol A: BPA) were used. The structural formula of the obtained resin is as follows.

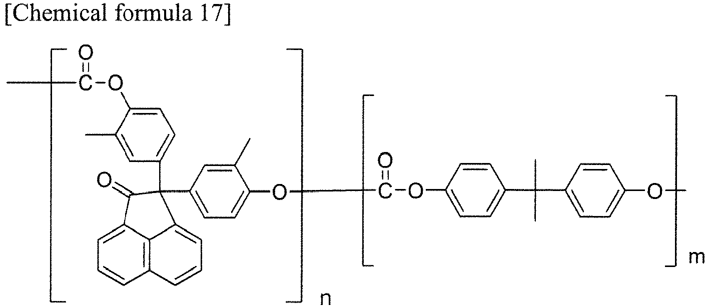

### <Example 3>

1.762 kg (4.0 mol) of acenaphthoquinonebisphenoxyethanol (hereinafter, referred to simply as "BisPEO-ACNQ) obtained in synthesis example 2, 8.869 kg (41.40 mol) of diphenylcarbonate (DPC), and 0.00123 g (1.46 × 10⁻⁵ mol) of sodium hydrogencarbonate were put into a 50-liter reactor including a stirrer and a distillation device, and heated to 215°C over 1 hour under a nitrogen atmosphere of 760 Torr and stirred.

Then, the pressure reduction degree was adjusted to 150 Torr over 30 minutes, and a transesterification reaction was performed while the substances were kept at 215°C and 150 Torr for 40 minutes. Then, the substances were heated to 240°C at a rate of 37.5°C/hr and kept at 240°C and 150 Torr for 10 minutes. Then, the pressure reduction degree was adjusted to 120 Torr over 10 minutes, and kept at 240°C and 120 Torr for 70 minutes. Then, the pressure reduction degree was adjusted to 100 Torr over 10 minutes, and kept at 240°C and 100 Torr for 10 minutes. Then, the pressure reduction degree was further adjusted to 1 Torr over 40 minutes, and a polymerization reaction was performed while the substances were stirred at 240°C and 1 Torr or lower for 30 minutes. After the reaction was finished, nitrogen was blown into the reactor for pressurization, and the generated polycarbonate resin was drawn out while being pelletized. The intrinsic viscosity at 20°C of a solution of this polymer using methylene chloride as a solvent and having a concentration of 0.5 g/dl was 0.65 dl/g. The obtained polymer was analyzed by infrared absorption spectrum. Absorption by a carbonyl group was recognized at a position in the vicinity of 1770 cm⁻¹, and absorption by an ether bond was recognized at a position in the vicinity of 1240 cm⁻¹. Thus, it was confirmed that the resultant polymer was a polycarbonate resin including the structural unit represented by generation formula (I) above. The structural formula of the obtained resin is as follows.

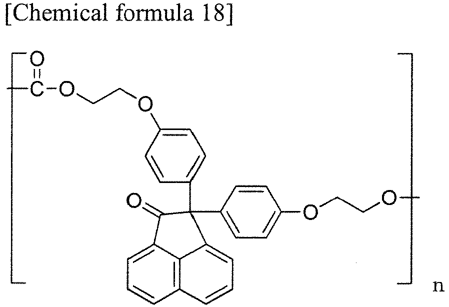

The obtained resin was dissolved in methylene chloride (polymer solution concentration: 20 wt.%) and then cast to produce a film.

### <Example 4>

Substantially the same process as that in Example 1 was performed except that 0.440 kg (1.0 mol) of BisPEO-ACNQ was used instead of BisOC-ACNQ and that 0.228 kg (0.1 mol) of BPA was also used. The structural formula of the obtained resin is as follows.

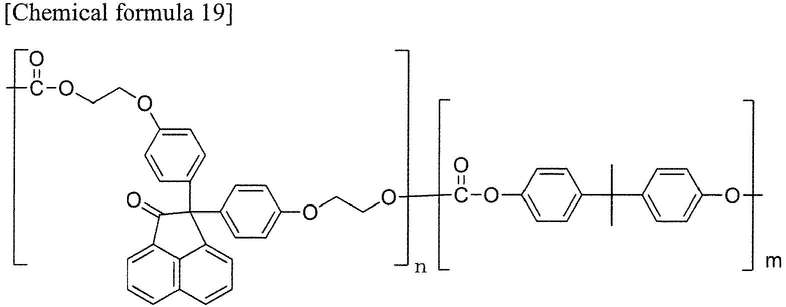

### <Comparative Example 1>

As a polycarbonate resin formed of bisphenol A, Iupilon E-2000 (produced by Mitsubishi Engineering-Plastics Corporation) was used. The structural formula of this resin is as follows.

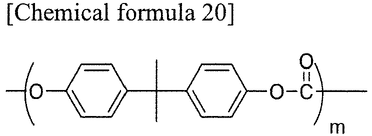

### <Comparative Example 2>

Substantially the same process as that in Example 1 was performed except that 175.2 g (0.5 mol) of 9,9-bis(4-hydroxyphenyl)fluorene was used instead of BisOC-ACNQ. The structural formula of the obtained resin is as follows.

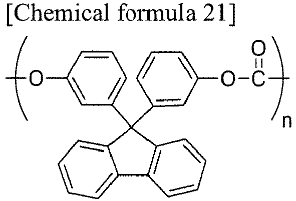

### <Comparative Example 3>

Substantially the same process as that in Example 1 was performed except that 105.1 g (0.3 mol) of 9,9-bis(4-hydroxyphenyl)fluorene was used instead of BisOC-ACNQ and that 68.4 g (0.3 mol) of BPA was also used. The structural formula of the obtained resin is as follows.

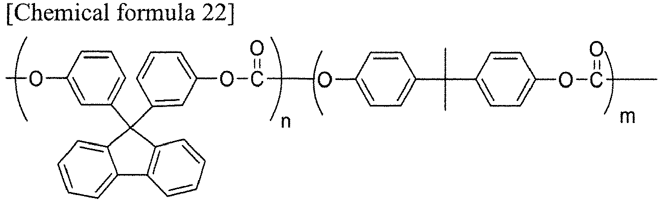

The properties of the resins and films obtained in Examples 1 through 4 and Comparative Examples 1 through 3 were measured. The results are shown in Table 1. A polycarbonate resin according to the present invention contains a novel monomer having an acenaphthene skeleton. It is seen from the results in Table 1 that the present invention can provide a polycarbonate resin which has good balance with a high strength, a high transparency and a low photoelastic coefficient and thus is preferable for a phase film.

**[Table 1]**

| | Ex. 1 | Ex. 2 | Ex. 3 | Ex. 4 | Comparative ex. 1 | Comparative ex. 2 | Comparative ex. 3 |
|---|---|---|---|---|---|---|---|
| Intrinsic viscosity | 0.55 | 0.59 | 0.65 | 0.51 | 0.65 | 0.39 | 0.55 |
| Tg (°C) | 178 | 165 | 150 | 148 | 145 | 245 | 214 |
| Photoelastic coefficient (%) | 30 | 45 | 35 | 44 | 83 | 24 | 48 |
| Total transmittance (%) | 88 | 89 | 90 | 90 | 91 | 89 | 89 |
| Tensile strength (MPa) | 64 | 61 | 66 | 63 | 58 | 15 | 30 |
| Tensile elongation (%) | 46 | 35 | 38 | 29 | 61 | Broken before yield | Broken before yield |

## Claims

1. A polycarbonate resin, comprising a structural unit represented by a general formula (I) below: 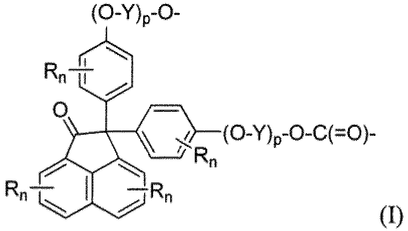 (where R's independently represent a halogen atom, an alkyl group having 1 to 9 carbon atoms, an aryl group having 6 to 12 carbon atoms, an alkenyl group having 2 to 5 carbon atoms, an alkoxy group having 1 to 5 carbon atoms, or an aralkyl group having 7 to 17 carbon atoms; n's independently indicate the number of R's which substitute on a corresponding benzene ring and independently represent an integer of 0 to 4; Y represents an alkylene group having 1 to 4 carbon atoms; and p represents an integer of 0 to 4).

2. The polycarbonate resin according to claim 1, further comprising a structural unit represented by a general formula (II) below: 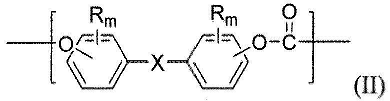 (where R's independently represent a halogen atom, an alkyl group having 1 to 9 carbon atoms, an aryl group having 6 to 12 carbon atoms, an alkenyl group having 2 to 5 carbon atoms, an alkoxy group having 1 to 5 carbon atoms, or an aralkyl group having 7 to 17 carbon atoms; m's independently indicate the number of R's which substitute on a corresponding benzene ring and independently represent an integer of 0 to 4; and X represents a group selected from: 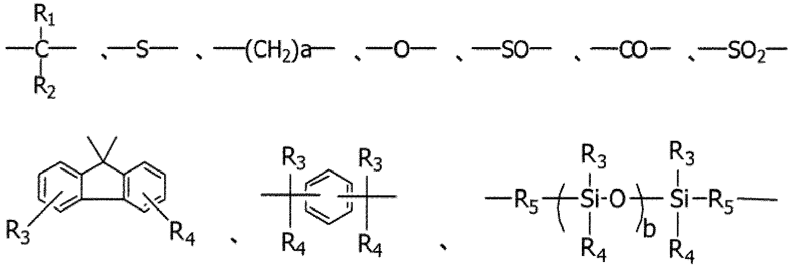 in which R₁ and R₂ independently represent hydrogen, fluorine, chlorine, bromine, iodine, an alkyl group having 1 to 9 carbon atoms, an alkoxy group having 1 to 5 carbon atoms, an aryl group having 6 to 12 carbon atoms, an alkenyl group having 2 to 5 carbon atoms, or an aralkyl group having 7 to 17 carbon atoms, or R₁ and R₂ are bonded together to form a carbocycle or a heterocycle; R₃'s and R₄'s independently represent hydrogen, fluorine, chlorine, bromine, iodine, an alkyl group having 1 to 9 carbon atoms, an alkoxy group having 1 to 5 carbon atoms, or an aryl group having 6 to 12 carbon atoms; R₅'s independently represent an alkylene group having 1 to 9 carbon atoms; a represents an integer of 0 to 20; and b represents an integer of 1 to 500).

3. The polycarbonate resin according to claim 1 or 2, which has an intrinsic viscosity of 0.3 to 2.0 dl/g.

4. The polycarbonate resin according to claim 1, wherein the structural unit represented by the general formula (I) occupies 5 to 100 mol% with respect to all the structural units included therein.

5. The polycarbonate resin according to claim 2, wherein the structural unit represented by the general formula (II) is 2,2-bis(4-hydroxyphenyl)propane.

6. An optical material, comprising the polycarbonate resin according to any one of claims 1 through 5.

7. An optical film, comprising the polycarbonate resin according to any one of claims 1 through 5.

8. A method for manufacturing the polycarbonate resin according to claim 2, the method comprising the step of performing melt polycondensation of a dihydroxy compound represented by a general formula (III) below, a dihydroxy compound represented by a general formula (IV) below and a carbonic acid ester-forming compound in the presence of a basic compound catalyst: 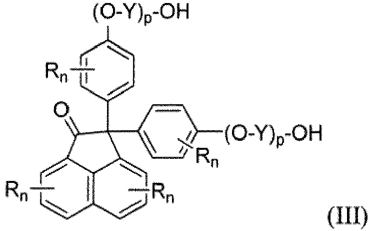 (where R's independently represent a halogen atom, an alkyl group having 1 to 9 carbon atoms, an aryl group having 6 to 12 carbon atoms, an alkenyl group having 2 to 5 carbon atoms, an alkoxy group having 1 to 5 carbon atoms, or an aralkyl group having 7 to 17 carbon atoms; n's independently indicate the number of R's which substitute on a corresponding benzene ring and independently represent an integer of 0 to 4; Y represents an alkylene group having 1 to 4 carbon atoms; and p represents an integer of 0 to 4); 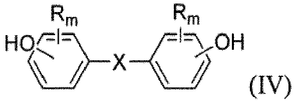 (where R's independently represent a halogen atom, an alkyl group having 1 to 9 carbon atoms, an aryl group having 6 to 12 carbon atoms, an alkenyl group having 2 to 5 carbon atoms, an alkoxy group having 1 to 5 carbon atoms, or an aralkyl group having 7 to 17 carbon atoms; m's independently indicate the number of R's which substitute on a corresponding benzene ring and independently represent an integer of 0 to 4; and X represents a group selected from: 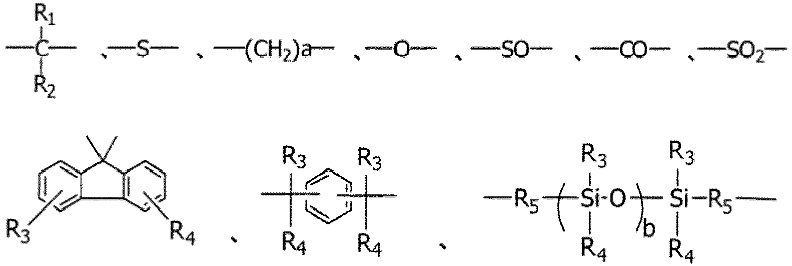 where R₁ and R₂ independently represent hydrogen, fluorine, chlorine, bromine, iodine, an alkyl group having 1 to 9 carbon atoms, an alkoxy group having 1 to 5 carbon atoms, an aryl group having 6 to 12 carbon atoms, an alkenyl group having 2 to 5 carbon atoms, or an aralkyl group having 7 to 17 carbon atoms, or R₁ and R₂ are bonded together to form a carbocycle or a heterocycle; R₃'s and R₄'s independently represent hydrogen, fluorine, chlorine, bromine, iodine, an alkyl group having 1 to 9 carbon atoms, an alkoxy group having 1 to 5 carbon atoms, or an aryl group having 6 to 12 carbon atoms; R₅'s independently represent an alkylene group having 1 to 9 carbon atoms; a represents an integer of 0 to 20; and b represents an integer of 1 to 500).

9. A method for manufacturing the polycarbonate resin according to claim 2, the method comprising the step of performing solution polymerization or interfacial polymerization of a dihydroxy compound represented by a general formula (III) below, a dihydroxy compound represented by a general formula (IV) below, a carbonic acid ester-forming compound and a terminal blocking agent: 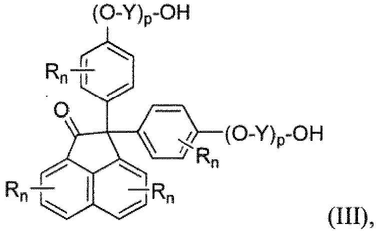 (where R's independently represent a halogen atom, an alkyl group having 1 to 9 carbon atoms, an aryl group having 6 to 12 carbon atoms, an alkenyl group having 2 to 5 carbon atoms, an alkoxy group having 1 to 5 carbon atoms, or an aralkyl group having 7 to 17 carbon atoms; n's independently indicate the number of R's which substitute on a corresponding benzene ring and independently represent an integer of 0 to 4; Y represents an alkylene group having 1 to 4 carbon atoms; and p represents an integer of 0 to 4); 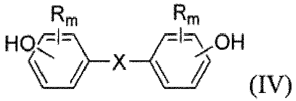 (where R's independently represent a halogen atom, an alkyl group having 1 to 9 carbon atoms, an aryl group having 6 to 12 carbon atoms, an alkenyl group having 2 to 5 carbon atoms, an alkoxy group having 1 to 5 carbon atoms, or an aralkyl group having 7 to 17 carbon atoms; m's independently indicate the number of R's which substitute on a corresponding benzene ring and independently represent an integer of 0 to 4; and X represents a group selected from: 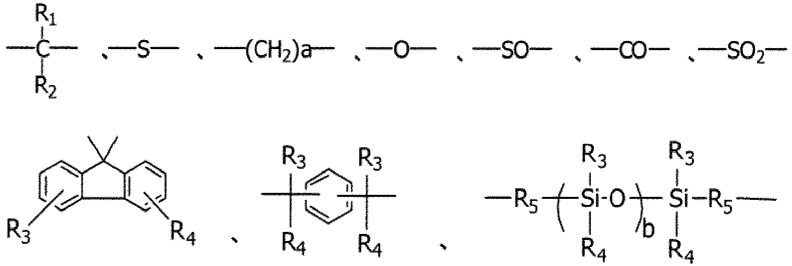 where R₁ and R₂ independently represent hydrogen, fluorine, chlorine, bromine, iodine, an alkyl group having 1 to 9 carbon atoms, an alkoxy group having 1 to 5 carbon atoms, an aryl group having 6 to 12 carbon atoms, an alkenyl group having 2 to 5 carbon atoms, or an aralkyl group having 7 to 17 carbon atoms, or R₁ and R₂ are bonded together to form a carbocycle or a heterocycle; R₃'s and R₄'s independently represent hydrogen, fluorine, chlorine, bromine, iodine, an alkyl group having 1 to 9 carbon atoms, an alkoxy group having 1 to 5 carbon atoms, or an aryl group having 6 to 12 carbon atoms; R₅'s independently represent an alkylene group having 1 to 9 carbon atoms; a represents an integer of 0 to 20; and b represents an integer of 1 to 500).

## Patentansprüche

1. Polycarbonatharz, umfassend eine durch eine nachstehende allgemeine Formel (I) dargestellte Struktureinheit: 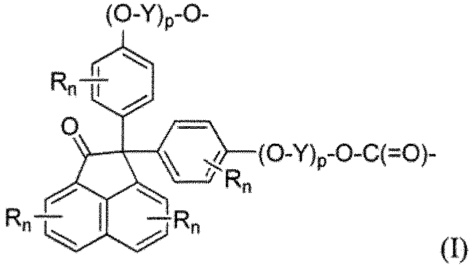 (worin die R unabhängig ein Halogenatom, eine Alkylgruppe mit 1 bis 9 Kohlenstoffatomen, eine Arylgruppe mit 6 bis 12 Kohlenstoffatomen, eine Alkenylgruppe mit 2 bis 5 Kohlenstoffatomen, eine Alkoxygruppe mit 1 bis 5 Kohlenstoffatomen oder eine Aralkylgruppe mit 7 bis 17 Kohlenstoffatomen darstellen, die n unabhängig die Anzahl der R angeben, die an einem entsprechenden Benzolring substituieren, und unabhängig eine ganze Zahl von 0 bis 4 darstellen, Y eine Alkylengruppe mit 1 bis 4 Kohlenstoffatomen darstellt und p eine ganze Zahl von 0 bis 4 darstellt).

2. Polycarbonatharz gemäß Anspruch 1, ferner umfassend eine durch eine nachstehende allgemeine Formel (II) dargestellte Struktureinheit: 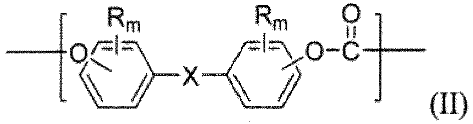 (worin die R unabhängig ein Halogenatom, eine Alkylgruppe mit 1 bis 9 Kohlenstoffatomen, eine Arylgruppe mit 6 bis 12 Kohlenstoffatomen, eine Alkenylgruppe mit 2 bis 5 Kohlenstoffatomen, eine Alkoxygruppe mit 1 bis 5 Kohlenstoffatomen oder eine Aralkylgruppe mit 7 bis 17 Kohlenstoffatomen darstellen, die m die Anzahl der R angeben, die an einem entsprechenden Benzolring substituieren, und unabhängig eine ganze Zahl von 0 bis 4 darstellen und X eine Gruppe, ausgewählt aus: 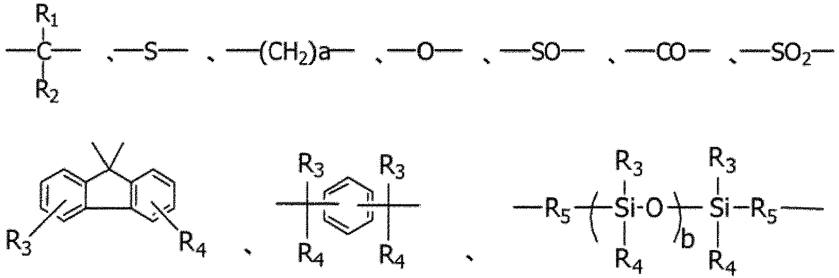 darstellt,
worin R₁ und R₂ unabhängig Wasserstoff, Fluor, Chlor, Brom, Iod, eine Alkylgruppe mit 1 bis 9 Kohlenstoffatomen, eine Alkoxygruppe mit 1 bis 5 Kohlenstoffatomen, eine Arylgruppe mit 6 bis 12 Kohlenstoffatomen, eine Alkenylgruppe mit 2 bis 5 Kohlenstoffatomen oder eine Aralkylgruppe mit 7 bis 17 Kohlenstoffatomen darstellen oder R₁ und R₂ aneinander gebunden sind, um einen Carbozyklus oder einen Heterozyklus zu bilden, die R₃ und R₄ unabhängig Wasserstoff, Fluor, Chlor, Brom, Iod, eine Alkylgruppe mit 1 bis 9 Kohlenstoffatomen, eine Alkoxygruppe mit 1 bis 5 Kohlenstoffatomen oder eine Arylgruppe mit 6 bis 12 Kohlenstoffatomen darstellen, die R₅ unabhängig eine Alkylengruppe mit 1 bis 9 Kohlenstoffatomen darstellen, a eine ganze Zahl von 0 bis 20 darstellt und b eine ganze Zahl von 1 bis 500 darstellt).

3. Polycarbonatharz gemäß Anspruch 1 oder 2, das eine Grenzviskosität von 0,3 bis 2,0 dl/g aufweist.

4. Polycarbonatharz gemäß Anspruch 1, wobei die durch die allgemeine Formel (I) dargestellte Struktureinheit 5 bis 100 mol-% in Bezug auf alle darin eingeschlossenen Struktureinheiten einnimmt.

5. Polycarbonatharz gemäß Anspruch 2, wobei die durch die allgemeine Formel (II) dargestellte Struktureinheit 2,2-Bis(4-hydroxyphenyl)propan ist.

6. Optisches Material, umfassend das Polycarbonatharz gemäß irgendeinem der Ansprüche 1 bis 5.

7. Optischer Film, umfassend das Polycarbonatharz gemäß irgendeinem der Ansprüche 1 bis 5.

8. Verfahren zur Herstellung des Polycarbonatharzes gemäß Anspruch 2, wobei das Verfahren den Schritt zur Durchführung einer Schmelzpolykondensation einer durch eine nachstehende allgemeine Formel (III) dargestellten Dihydroxyverbindung, einer durch eine nachstehende allgemeine Formel (IV) dargestellten Dihydroxyverbindung und einer Kohlensäureester-bildenden Verbindung in Gegenwart einer basischen Katalysatorverbindung umfasst: 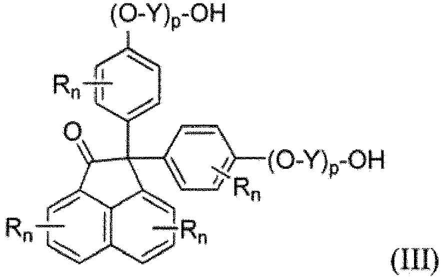 (worin die R unabhängig ein Halogenatom, eine Alkylgruppe mit 1 bis 9 Kohlenstoffatomen, eine Arylgruppe mit 6 bis 12 Kohlenstoffatomen, eine Alkenylgruppe mit 2 bis 5 Kohlenstoffatomen, eine Alkoxygruppe mit 1 bis 5 Kohlenstoffatomen oder eine Aralkylgruppe mit 7 bis 17 Kohlenstoffatomen darstellen, die n unabhängig die Anzahl der R angeben, die an einem entsprechenden Benzolring substituieren, und unabhängig eine ganze Zahl von 0 bis 4 darstellen, Y eine Alkylengruppe mit 1 bis 4 Kohlenstoffatomen darstellt und p eine ganze Zahl von 0 bis 4 darstellt), 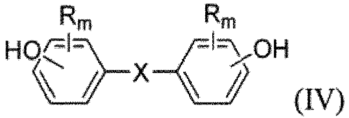 (worin die R unabhängig ein Halogenatom, eine Alkylgruppe mit 1 bis 9 Kohlenstoffatomen, eine Arylgruppe mit 6 bis 12 Kohlenstoffatomen, eine Alkenylgruppe mit 2 bis 5 Kohlenstoffatomen, eine Alkoxygruppe mit 1 bis 5 Kohlenstoffatomen oder eine Aralkylgruppe mit 7 bis 17 Kohlenstoffatomen darstellen, die m die Anzahl der R angeben, die an einem entsprechenden Benzolring substituieren, und unabhängig eine ganze Zahl von 0 bis 4 darstellen und X eine Gruppe, ausgewählt aus: 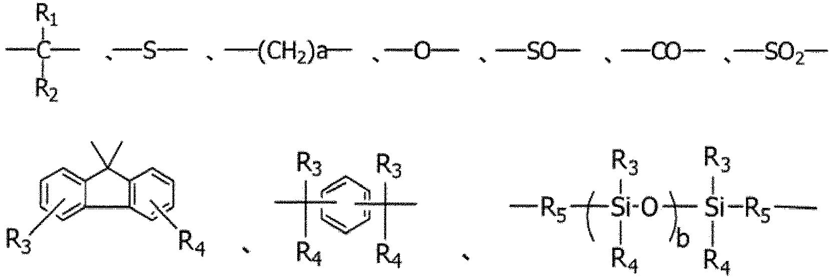 darstellt,
worin R₁ und R₂ unabhängig Wasserstoff, Fluor, Chlor, Brom, Iod, eine Alkylgruppe mit 1 bis 9 Kohlenstoffatomen, eine Alkoxygruppe mit 1 bis 5 Kohlenstoffatomen, eine Arylgruppe mit 6 bis 12 Kohlenstoffatomen, eine Alkenylgruppe mit 2 bis 5 Kohlenstoffatomen oder eine Aralkylgruppe mit 7 bis 17 Kohlenstoffatomen darstellen oder R₁ und R₂ aneinander gebunden sind, um einen Carbozyklus oder einen Heterozyklus zu bilden, die R₃ und R₄ unabhängig Wasserstoff, Fluor, Chlor, Brom, Iod, eine Alkylgruppe mit 1 bis 9 Kohlenstoffatomen, eine Alkoxygruppe mit 1 bis 5 Kohlenstoffatomen oder eine Arylgruppe mit 6 bis 12 Kohlenstoffatomen darstellen, die R₅ unabhängig eine Alkylengruppe mit 1 bis 9 Kohlenstoffatomen darstellen, a eine ganze Zahl von 0 bis 20 darstellt und b eine ganze Zahl von 1 bis 500 darstellt).

9. Verfahren zur Herstellung des Polycarbonatharzes gemäß Anspruch 2, wobei das Verfahren den Schritt zur Durchführung einer Lösungspolymerisation oder Grenzflächenpolymerisation einer durch eine nachstehende allgemeine Formel (III) dargestellten Dihydroxyverbindung, einer durch eine nachstehende allgemeine Formel (IV) dargestellten Dihydroxyverbindung, einer Kohlensäureester-bildenden Verbindung und eines terminalen Blockierungsmittels umfasst: 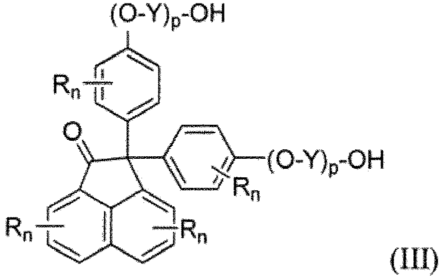 (worin die R unabhängig ein Halogenatom, eine Alkylgruppe mit 1 bis 9 Kohlenstoffatomen, eine Arylgruppe mit 6 bis 12 Kohlenstoffatomen, eine Alkenylgruppe mit 2 bis 5 Kohlenstoffatomen, eine Alkoxygruppe mit 1 bis 5 Kohlenstoffatomen oder eine Aralkylgruppe mit 7 bis 17 Kohlenstoffatomen darstellen, die n unabhängig die Anzahl der R angeben, die an einem entsprechenden Benzolring substituieren, und unabhängig eine ganze Zahl von 0 bis 4 darstellen, Y eine Alkylengruppe mit 1 bis 4 Kohlenstoffatomen darstellt und p eine ganze Zahl von 0 bis 4 darstellt), 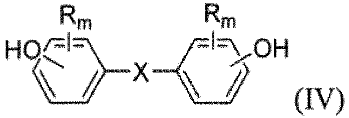 (worin die R unabhängig ein Halogenatom, eine Alkylgruppe mit 1 bis 9 Kohlenstoffatomen, eine Arylgruppe mit 6 bis 12 Kohlenstoffatomen, eine Alkenylgruppe mit 2 bis 5 Kohlenstoffatomen, eine Alkoxygruppe mit 1 bis 5 Kohlenstoffatomen oder eine Aralkylgruppe mit 7 bis 17 Kohlenstoffatomen darstellen, die m die Anzahl der R angeben, die an einem entsprechenden Benzolring substituieren, und unabhängig eine ganze Zahl von 0 bis 4 darstellen und X eine Gruppe, ausgewählt aus: 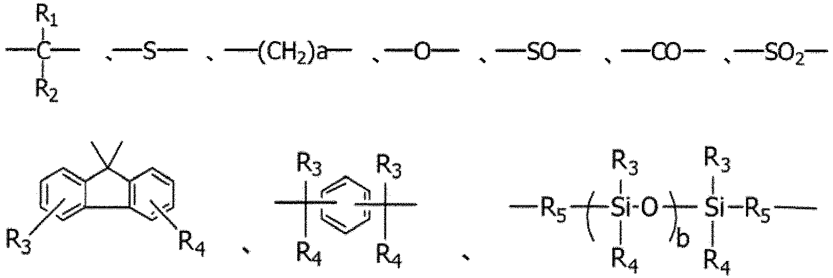 darstellt,
worin R₁ und R₂ unabhängig Wasserstoff, Fluor, Chlor, Brom, Iod, eine Alkylgruppe mit 1 bis 9 Kohlenstoffatomen, eine Alkoxygruppe mit 1 bis 5 Kohlenstoffatomen, eine Arylgruppe mit 6 bis 12 Kohlenstoffatomen, eine Alkenylgruppe mit 2 bis 5 Kohlenstoffatomen oder eine Aralkylgruppe mit 7 bis 17 Kohlenstoffatomen darstellen oder R₁ und R₂ aneinander gebunden sind, um einen Carbozyklus oder einen Heterozyklus zu bilden, die R₃ und R₄ unabhängig Wasserstoff, Fluor, Chlor, Brom, Iod, eine Alkylgruppe mit 1 bis 9 Kohlenstoffatomen, eine Alkoxygruppe mit 1 bis 5 Kohlenstoffatomen oder eine Arylgruppe mit 6 bis 12 Kohlenstoffatomen darstellen, die R₅ unabhängig eine Alkylengruppe mit 1 bis 9 Kohlenstoffatomen darstellen, a eine ganze Zahl von 0 bis 20 darstellt und b eine ganze Zahl von 1 bis 500 darstellt).

## Revendications

1. Résine de polycarbonate, comprenant un motif de structure représenté par une formule générale (I) ci-dessous : 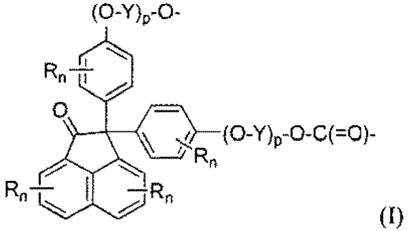 (dans laquelle les R représentent indépendamment un atome d'halogène, un groupe alkyle présentant 1 à 9 atomes de carbone, un groupe aryle présentant 6 à 12 atomes de carbone, un groupe alcényle présentant 2 à 5 atomes de carbone, un groupe alcoxy présentant 1 à 5 atomes de carbone, ou un groupe aralkyle présentant 7 à 17 atomes de carbone ; les n indiquent indépendamment le nombre de substituants R sur un cycle benzène correspondant et représentent indépendamment un nombre entier de 0 à 4; Y représente un groupe alkylène présentant 1 à 4 atomes de carbone; et p représente un nombre entier de 0 à 4).

2. Résine de polycarbonate selon la revendication 1, comprenant en outre un motif de structure représenté par une formule générale (II) ci-dessous : 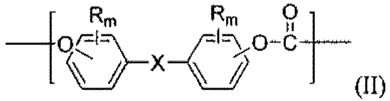 (dans laquelle les R représentent indépendamment un atome d'halogène, un groupe alkyle présentant 1 à 9 atomes de carbone, un groupe aryle présentant 6 à 12 atomes de carbone, un groupe alcényle présentant 2 à 5 atomes de carbone, un groupe alcoxy présentant 1 à 5 atomes de carbone, ou un groupe aralkyle présentant 7 à 17 atomes de carbone; les m indiquent indépendamment le nombre de substituants R sur un cycle benzène correspondant et représentent indépendamment un nombre entier de 0 à 4 ; et X représente un groupe sélectionné parmi : 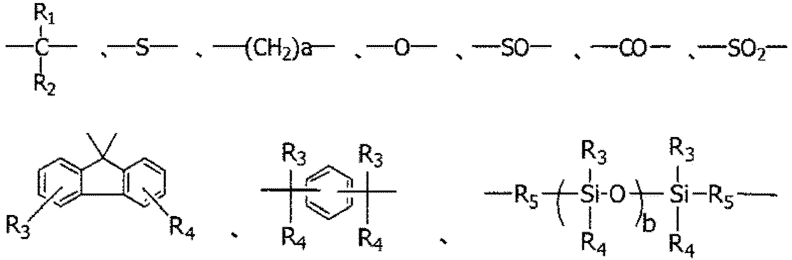 dans lesquels R₁ et R₂ représentent indépendamment un hydrogène, un fluor, un chlore, un brome, un iode, un groupe alkyle présentant 1 à 9 atomes de carbone, un groupe alcoxy présentant 1 à 5 atomes de carbone, un groupe aryle présentant 6 à 12 atomes de carbone, un groupe alcényle présentant 2 à 5 atomes de carbone, ou un groupe aralkyle présentant 7 à 17 atomes de carbone, ou R₁ et R₂ sont liés ensemble pour former un carbocycle ou un hétérocycle ; R₃ et R₄ représentent indépendamment un hydrogène, un fluor, un chlore, un brome, un iode, un groupe alkyle présentant 1 à 9 atomes de carbone, un groupe alcoxy présentant 1 à 5 atomes de carbone, ou un groupe aryle présentant 6 à 12 atomes de carbone ; les R₅ représentent indépendamment un groupe alkylène présentant 1 à 9 atomes de carbone ; a représente un nombre entier de 0 à 20 ; et b représente un nombre entier de 1 à 500).

3. Résine de polycarbonate selon la revendication 1 ou 2, qui présente une viscosité intrinsèque de 0,3 à 2,0 dl/g.

4. Résine de polycarbonate selon la revendication 1, dans laquelle le motif de structure représenté par la formule générale (I) occupe 5 à 100 % en mole par rapport à tous les motifs de structure inclus dans celle-ci.

5. Résine de polycarbonate selon la revendication 2, dans laquelle le motif de structure représenté par la formule générale (II) est le 2,2-bis(4-hydroxyphényl)propane.

6. Matériau optique, comprenant la résine de polycarbonate selon l'une quelconque des revendications 1 à 5.

7. Film optique, comprenant la résine de polycarbonate selon l'une quelconque des revendications 1 à 5.

8. Procédé de préparation de la résine de polycarbonate selon la revendication 2, le procédé comprenant l'étape consistant à mettre en œuvre une polycondensation à l'état fondu d'un composé dihydroxy représenté par une formule générale (III) ci-dessous, d'un composé dihydroxy représenté par une formule générale (IV) ci-dessous et d'un composé formant un ester d'acide carbonique en présence d'un composé catalyseur basique : 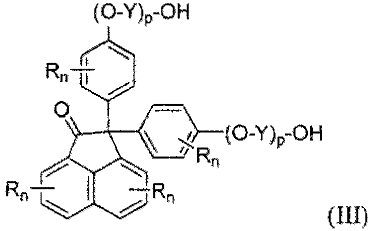 (dans laquelle les R représentent indépendamment un atome d'halogène, un groupe alkyle présentant 1 à 9 atomes de carbone, un groupe aryle présentant 6 à 12 atomes de carbone, un groupe alcényle présentant 2 à 5 atomes de carbone, un groupe alcoxy présentant 1 à 5 atomes de carbone, ou un groupe aralkyle présentant 7 à 17 atomes de carbone ; les n indiquent indépendamment le nombre de substituants R sur un cycle benzène correspondant et représentent indépendamment un nombre entier de 0 à 4; Y représente un groupe alkylène présentant 1 à 4 atomes de carbone; et p représente un nombre entier de 0 à 4) ; 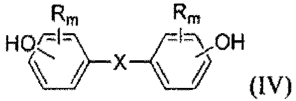 (dans laquelle les R représentent indépendamment un atome d'halogène, un groupe alkyle présentant 1 à 9 atomes de carbone, un groupe aryle présentant 6 à 12 atomes de carbone, un groupe alcényle présentant 2 à 5 atomes de carbone, un groupe alcoxy présentant 1 à 5 atomes de carbone, ou un groupe aralkyle présentant 7 à 17 atomes de carbone; les m indiquent indépendamment le nombre de substituants R sur un cycle benzène correspondant et représentent indépendamment un nombre entier de 0 à 4 ; et X représente un groupe sélectionné parmi : 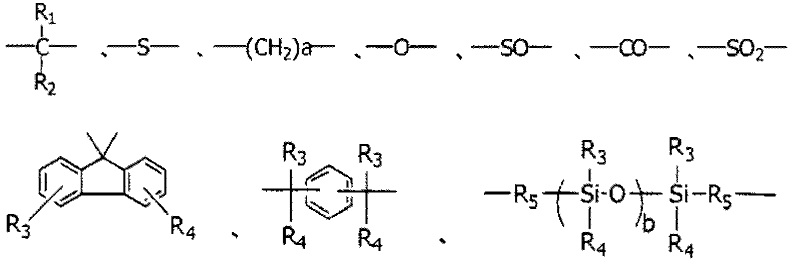 dans lesquels R₁ et R₂ représentent indépendamment un hydrogène, un fluor, un chlore, un brome, un iode, un groupe alkyle présentant 1 à 9 atomes de carbone, un groupe alcoxy présentant 1 à 5 atomes de carbone, un groupe aryle présentant 6 à 12 atomes de carbone, un groupe alcényle présentant 2 à 5 atomes de carbone, ou un groupe aralkyle présentant 7 à 17 atomes de carbone, ou R₁ et R₂ sont liés ensemble pour former un carbocycle ou un hétérocycle ; R₃ et R₄ représentent indépendamment un hydrogène, un fluor, un chlore, un brome, un iode, un groupe alkyle présentant 1 à 9 atomes de carbone, un groupe alcoxy présentant 1 à 5 atomes de carbone, ou un groupe aryle présentant 6 à 12 atomes de carbone ; les R₅ représentent indépendamment un groupe alkylène présentant 1 à 9 atomes de carbone ; a représente un nombre entier de 0 à 20 ; et b représente un nombre entier de 1 à 500).

9. Procédé de préparation de la résine de polycarbonate selon la revendication 2, le procédé comprenant l'étape consistant à mettre en œuvre une polymérisation en solution ou une polymérisation interfaciale d'un composé dihydroxy représenté par une formule générale (III) ci-dessous, d'un composé dihydroxy représenté par une formule générale (IV) ci-dessous, d'un composé formant un ester d'acide carbonique et d'un agent de blocage d'extrémité : 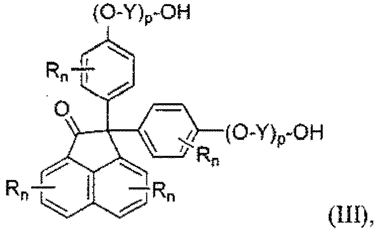 (dans laquelle les R représentent indépendamment un atome d'halogène, un groupe alkyle présentant 1 à 9 atomes de carbone, un groupe aryle présentant 6 à 12 atomes de carbone, un groupe alcényle présentant 2 à 5 atomes de carbone, un groupe alcoxy présentant 1 à 5 atomes de carbone, ou un groupe aralkyle présentant 7 à 17 atomes de carbone ; les n indiquent indépendamment le nombre de substituants R sur un cycle benzène correspondant et représentent indépendamment un nombre entier de 0 à 4; Y représente un groupe alkylène présentant 1 à 4 atomes de carbone; et p représente un nombre entier de 0 à 4) ; 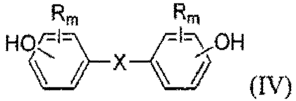 (dans laquelle les R représentent indépendamment un atome d'halogène, un groupe alkyle présentant 1 à 9 atomes de carbone, un groupe aryle présentant 6 à 12 atomes de carbone, un groupe alcényle présentant 2 à 5 atomes de carbone, un groupe alcoxy présentant 1 à 5 atomes de carbone, ou un groupe aralkyle présentant 7 à 17 atomes de carbone; les m indiquent indépendamment le nombre de substituants R sur un cycle benzène correspondant et représentent indépendamment un nombre entier de 0 à 4 ; et X représente un groupe sélectionné parmi : 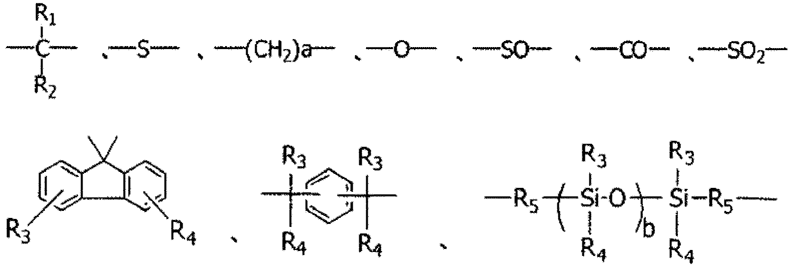 dans lesquels R₁ et R₂ représentent indépendamment un hydrogène, un fluor, un chlore, un brome, un iode, un groupe alkyle présentant 1 à 9 atomes de carbone, un groupe alcoxy présentant 1 à 5 atomes de carbone, un groupe aryle présentant 6 à 12 atomes de carbone, un groupe alcényle présentant 2 à 5 atomes de carbone, ou un groupe aralkyle présentant 7 à 17 atomes de carbone, ou R1 et R2 sont liés ensemble pour former un carbocycle ou un hétérocycle ; R₃ et R₄ représentent indépendamment un hydrogène, un fluor, un chlore, un brome, un iode, un groupe alkyle présentant 1 à 9 atomes de carbone, un groupe alcoxy présentant 1 à 5 atomes de carbone, ou un groupe aryle présentant 6 à 12 atomes de carbone ; les R₅ représentent indépendamment un groupe alkylène présentant 1 à 9 atomes de carbone ; a représente un nombre entier de 0 à 20 ; et b représente un nombre entier de 1 à 500).
